# EUROPEAN PATENT SPECIFICATION

(11) **EP 0 968 084 B1**
(45) Date of publication and mention of the grant of the patent: **07.05.2008**
(21) Application number: 98912604.0
(22) Date of filing: 20.03.1998
(51) Int. Cl.: B32B 27/08, C08K 7/00

(54) **LAMINATED MATERIALS AND CONTAINERS THEREFROM**
MEHRSCHICHTMATERIALIEN UND DARAUS HERGESTELLTE BEHÄLTER
MATERIAUX STRATIFIES ET CONTENANTS FABRIQUES AVEC LESDITS MATERIAUX

(30) Priority: 21.03.1997 GB 9705921
(43) Date of publication of application: 05.01.2000
(73) Proprietor: Betts UK Limited, Colchester, Essex CO4 4HE (GB)
(72) Inventor: ASHMAN, Philip, Colin, Woodbridge Suffolk IP1L 1QY (GB); BENNETT, Julian, Colchester Essex CO5 7BP (GB); BRANCH, Mark, Graham, Leicester LE65 2FS (GB)
(74) Representative: Alexander, Thomas Bruce
(86) International application number: PCT/GB1998/000855
(87) International publication number: WO 1998/042506

(56) References cited:
- EP-A- 0 275 102
- EP-A- 0 309 095
- EP-A- 0 353 613
- EP-A- 0 494 594
- EP-A- 0 590 263
- WO-A-96/17885
- US-A- 4 526 823
- US-A- 4 528 235
- DATABASE WPI Section Ch, Week 9623 Derwent Publications Ltd., London, GB; Class A32, AN 96-224684 XP002069486 & JP 08 085 174 A (MITSUBISHI CHEM CORP)

## Description

### Technical Field

This invention relates to laminated materials and to flexible containers formed from laminated materials, in particular thermoplastics laminates that include a layer of material having good vapour barrier properties.

### Background of the Invention

Thermoplastics materials are widely used in packaging because of their low cost and ease of forming into a variety of shapes. However, most thermoplastics materials suffer from the disadvantage of providing only a relatively poor barrier to gases and vapours. Packaging having poor gas barrier properties is particularly disadvantageous for packaging oxygen-sensitive materials, such as foodstuffs, which are to be stored in a non-refrigerated condition. It is also disadvantageous for packaging to have poor vapour barrier properties when packaging items which are sensitive to moisture vapour, for example foodstuffs and confectionery which deteriorate when they become damp, and when packaging items which include flavouring components which diffuse through the packaging material with consequent loss of flavour.

Thermoplastic containers which are used for the storage and delivery of flavoured materials, e.g. toothpaste, are required to store the materials for prolonged periods of time, e.g. up to three years, without substantial loss of flavouring.

It has generally been thought that loss of flavouring is due to two mechanisms, namely permeation and absorption. The loss of flavouring due to permeation has been ameliorated by the use of laminates containing barrier layers. A known thermoplastics material with good barrier properties is ethylene vinyl alcohol (EVOH) which is typically used as a thin layer sandwiched between layers of other thermoplastics materials, typically polyolefinic materials. Other known materials with good barrier properties to vapour transmission are polyamides, polyacrylonitrile and aliphatic polyketones, and aluminium foil.

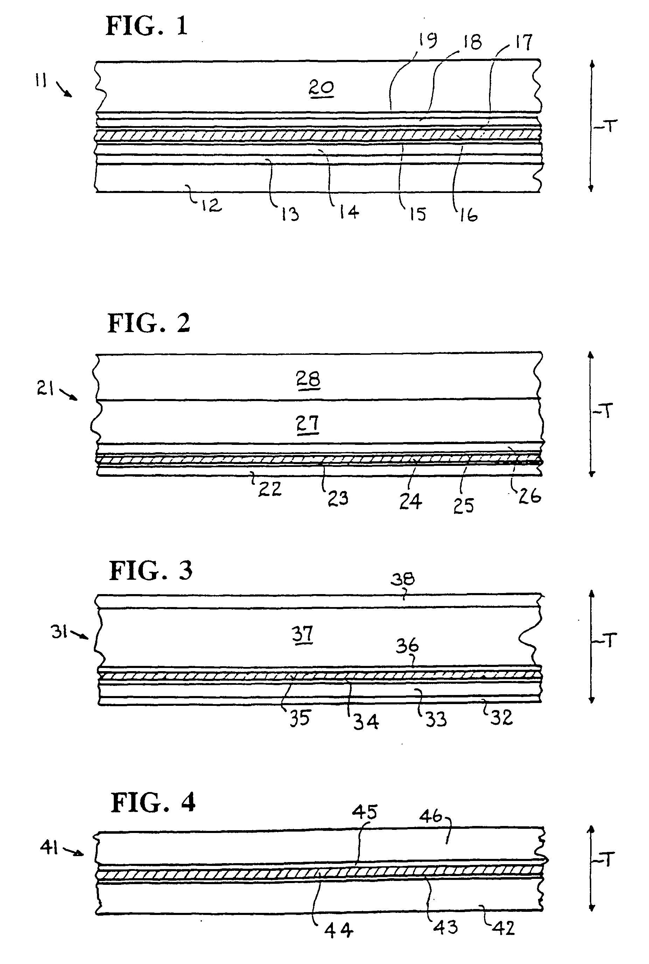

A typical prior art laminate having a centrally positioned barrier layer is shown in Figure 1 which will be described later.

Laminates having a barrier layer arranged asymmetrically within the different layers of the laminated material are also known. Figure 2, which will be described in detail later, shows a prior art laminate in which an EVOH barrier layer is arranged towards the inside surface, in use, of the laminate. The provision of such a barrier layer appears to reduce the loss of flavourings from within the container.

However, EVOH and other barrier layers materials are generally expensive and therefore a number of attempts have been made at improving the gas barrier properties of polyolefinic materials. GB-A-1136350, for example, proposes the use of circular plate-like fillers with a ratio of diameter to thickness of between 20:1 and 300:1 and a diameter of at most 40 microns in polyolefin polymers selected from polyethylene, polypropylene, ethylene-containing copolymers containing at least 50 moles percent of ethylene, and polystyrene, the preferred amount of filler being from 0.1 to 50 wt% of the total weight of filled polymer. Such filled polymer compositions have been proposed for the manufacture of films, for example films for food packaging.

US-A-3463350 is concerned with the production of moulded containers for packaging foodstuffs, the containers being made from mixtures of high density polyethylene (HDPE) and mica particles, for example by compression or injection moulding. Such containers are said to reduce the discolouration of so-called canned corned beef as caused by oxygen compared with the use of similar containers made of HDPE filled with glass fibre or titanium dioxide instead of mica.

It has also been proposed in US-A-4528235 to incorporate platelet filler particles with an average equivalent diameter of from 1 to 8 microns, the maximum diameter being 25 microns, and a thickness of less than 0.5 microns, into HDPE having a melt index of from 0.01 to 1.0 g/10 minutes at 190°C as measured by ASTM D-1238 to produce films having a thickness of from 10 to 100 microns, with the intention of increasing the effectiveness of the barrier to oxygen of the films compared with films formed from unfilled HDPE.

In WO-A-96/17885, the contents of which are hereby incorporated into the present invention, there is proposed a moulding composition, and a method of making a moulding composition, for forming an article having increased barrier to gases and/or vapours, the method comprising the step of mixing together a substantially non-polar thermoplastics resin and a laminar filler, the laminar filler being capable of delaminating when the composition is subjected to high shear to increase the aspect ratio of the filler as it breaks down into platelets. WO-A-96/17885 further describes a composition containing 85 parts by weight of high density polyethylene and 15 parts by weight of talc that can be extruded in the form of a film or tube having increased barrier properties. The composition can be extruded as a single web, or can be co-extruded with other layers of material formed on one or other side of a core layer formed from the composition.

### Disclosure of the Invention

The object of the present invention is to provide a laminated material which is relatively cheap and which has improved resistance to the loss of flavour in goods stored in a container formed from the material.

According to one aspect of the present invention there is provided a method as defined in claim 1.

The platelet filler comprises talc.

Talc is used as the platelet filler by virtue of its ease of delamination during shear. Talc, being a naturally occurring hydrated magnesium silicate, is available in a variety of grades of greater or lesser purity. It has been found that the ease of increasing the aspect ratio of talc when it is subjected to high shear in a non-polar thermoplastics resin appears to increase as the level of impurities within the talc decreases. Thus not only does it appear easier to delaminate the platelets of the talc, but the platelets themselves apparently resist fracture. Thus purer grades of talc are generally preferred since they lead to compositions which not only have good barrier properties but also have a high degree of whiteness without the necessity to include a white pigment such as titanium dioxide.

According to another aspect of the present invention, there is provided a laminated material for the manufacture of flexible containers and which, in use, has a surface intended to be external of the container and a surface intended to be internal of the container, the laminated material comprising an intermediate barrier layer of ethylene vinyl alcohol having, on its inner side, at least one further layer comprising substantially non-polar thermoplastics resin filled with platelet filler comprising high purity talc.

The preferred non-polar thermoplastics resin is a polyolefin resin, for example a polymer derived from one or more aliphatic or aromatic alkylenes, e.g. a polymer containing units derived from at least one of ethylene, propylene, butylene, styrene, hexene and octene. The non-polar resin may also comprise a compound of one or more polymers as detailed below. Examples of specific polyolefin resins which can be used include polyethylene, polypropylene,ethylene/ propylene copolymers, ethylene/propylene/butylene terpolymers, polyethylenes being particularly preferred by virtue of their good processing and welding characteristics. The polyethylene can be low density polyethylene, linear low density polyethylene (density of from 0.910 to 0.925 g.cm⁻³), medium density polyethylene, linear medium density polyethylene (density of from 0.925 to 0.950 g.cm⁻³), high density polyethylene (density of from 0.950 to 0.980 g.cm⁻³). High density polyethylene, or a compound of high density polyethylene and linear low density polyethylene, is particularly preferred by virtue of its higher inherent barrier properties compared with lower density polyethylenes.

The preferred HDPE resin has a density of at least 0.945 g.cm⁻³ and a melt flow index of from 4 to 10 g/10 min preferably 7 to 8 g/10 min, (2160 g load at 190°C) measured to ISO/IEC 1133. A suitable material is available from DSM grade 9089F.

The barrier layer comprises EVOH.

Particularly preferred grades of talc for use in the present invention are sold by Richard Baker Harrison Group, England under the Trade Mark MAGSIL, and an especially preferred grade is "Magsil Osmanthus" which delaminates in processing to form platelets having an average aspect ratio of from 16 to 30 and a minimum aspect ratio of 5.

Since the purity of talc is related to its whiteness, the preferred talc forms a moulded composition, as described below, having a CIE whiteness index of at least 40. These CIE (Commission Internationale d'Eclairage) whiteness index values are determined for compositions containing 15 percent by weight of talc in high density polyethylene with no other filler present, the determination being in reflectance mode with UV light included and specular reflection excluded, the observer angle being 10° of arc and the samples being backed by a white tile.

The talc is blended with the polyethylene in the weight ratio of 15 parts to 85 parts of polymer using a twin screw extruder or Banbury type mixer with a temperature profile ranging from 150°C to 220°C, the mixture being subjected to high shear during mixing, and then being extruded and cut into pellets. The pellets are then compression moulded to form plaques at a temperature of 150°C and pressure of 0.39 tonnes for 5 minutes.

The CIE whiteness index is measured using a Macbeth Spectrophotometer 2020+.

According to a further aspect of the present invention there is provided a container having flexible walls formed from a laminated material having a core barrier layer of ethylene vinyl alcohol with at least one further layer arranged internally of the barrier layer, said one further layer comprising substantially non-polar thermoplastics resin filled with platelets of talc having an aspect ratio of at least 5, an average aspect ratio of from 16 to 30 and a CIE whiteness of at least 40.

The arrangement of a layer of talc-filled non-polar thermoplastics resin internally of the barrier layer enables the thickness of the thermoplastics barrier layer to be reduced, from typically 25 microns, to a thickness of from 5 to 15 microns, preferably 10 microns, without substantially affecting the overall losses of volatiles from within the container. This is because the absorption properties of the container wall material are improved, that is less material is absorbed, whilst the permeation rate through the thinned down barrier layer remains largely unchanged.

The laminate construction can be a substantially symmetrical construction with the barrier layer at the centre and a layer comprising non-polar thermoplastics resin filled with platelet filler being arranged both inside and outside of the barrier layer. This allows the laminate to be used either way round which has advantages in the production of containers.

The thermoplastics barrier layer is an ethylene vinyl alcohol material. Preferably the talc filled non-polar thermoplastics resin layer has a thickness of from 5 to 150 microns, preferably from 10 to 70 microns, more preferably about 50 microns, and is spaced from the barrier layer only by a tie layer.

Preferably the talc filled non-polar thermoplastics resin layer is spaced from the internal surface of the laminate by an additional inner layer of a non-polar thermoplastics resin in order to improve the weld characteristics of the laminate on its inner surface. The additional inner layer may also contain said platelet filler, preferably talc. Preferably the further layer is formed from a high density polyethylene compound which may contain 15% by weight of talc filler, and at least a major, i.e. in excess of 50%, portion of high density polyethylene, and the additional layer is a linear medium density polyethylene. The further layer may alternatively comprise a tie layer which is filled with talc filler, especially when used in combination with aluminium foil. A typical tie layer for use with aluminium foil comprises ethylene acrylic acid copolymer having an acrylic acid content of from 2 to 10%.

### Brief Description of Drawings

The invention will now be described, by way of example only, and with particular reference to the accompanying drawing, in which:-
Figure 1 and Figure 2 are schematic representations of prior art laminates;
Figure 3 is a schematic representation of both a control laminate and a first laminate according to the present invention; and
Figure 4 is a schematic representative of a second laminate according to the present invention.

### Detailed Description of the Invention

### Sample 1

A known laminate 11, illustrated in Figure 1, has an overall thickness T of about 300 microns and comprises a plurality of layers 12-20, the inner layer being identified layer 12 and the external layer being layer 20. The inner layer 12 comprises linear medium density polyethylene (LMDPE) having a thickness of about 75 microns, and the adjacent outer layer 13 comprises low density polyethylene (LDPE) having a thickness of about 20 microns. Externally of the layer 13 is a layer 14 of linear low density polyethylene (LLDPE) having a thickness of about 20 microns which is adhered to an ethylene vinyl alcohol (EVOH) barrier layer 16 (shaded for ease of identification) by a tie layer 15. The tie layer 15 typically comprises a maleic anhydride functionalised polyethylene of about 5 microns thickness and the barrier layer 16 has a thickness of about 25 microns.

Externally of the barrier layer 16 are a tie layer 17, a LLDPE layer 18 and a LDPE layer 19 which are substantially identical to the layers 15, 14 and 13, respectively. The external layer 20 is a layer of medium density polyethylene (HDPE) having a thickness of about 110 microns.

### Sample 2

The second prior art laminate 21 shown in Figure 2 again has an overall thickness T of about 300 microns and comprises a plurality of layers 22-28, the inner layer being layer 22 and the external layer being layer 28. The inner layer 22 comprises LMPDE having a thickness of about 35 microns which is adhered to an EVOH barrier layer 24 (shaded for ease of identification) by a tie layer 23. The EVOH barrier layer 24 is about 15 microns thick and the tie layer 23 has a thickness of about 5 microns. Externally of the barrier layer 24 is another tie layer 25, a layer 26 of LLDPE having a thickness of 20 microns, a layer 27 of LLDPE or LDPE having a thickness of about 110 microns, and the external layer 28 of medium density polyethylene (MDPE) also having a thickness of about 110 microns.

With reference to Fig 3, there is shown a seven layer laminate 31 having an overall thickness of about 275 to 300 microns. This general laminate structure was used for a number of control samples 3-8, and a number of samples 9-13 according to the present invention. The laminate 31 from inside to outside comprises layers 32-38. The inner layer 32 is a layer of LMPDE about 25 to 35 microns thick. The adjacent outer layer 33 is HDPE with a thickness of from 15 to 50 microns which is adhered to a barrier layer 35 by a tie layer 34. The barrier layer 35 is an EVOH layer or an amorphous polyamide layer. The barrier layer 35 is about 10 to 15 microns thick and the tie layer 34 has a thickness of about 5 to 7.5 microns. Externally of the barrier layer 35 is a second tie layer 36, an outer HDPE layer 37 having a thickness of from about 50 to 190 microns, and an external LHPDE layer 38 having a thickness of about 25 to 35 microns.

The thickness in microns of the various layers for each control sample is given in Table 1 below.

The samples 9-13 according to the present invention include layers of polymer filled with 15% ww talc (Magsil Osmonthous) arranged inside of the barrier layer 35. The structure of samples 9-13 are also given in Table 1 below with the layer thickness in microns.

**Table 1**

| | 3 | 4 | 5 | 6 | 7 | 8 | 9 | 10 | 11 | 12 | 13 |
|---|---|---|---|---|---|---|---|---|---|---|---|
| Layer 32 | 25 | 25 | 25 | 25 | 35 | 35 | 25 | 25 | 15 | 25 | 25 |
| Layer 33 | 50 | 48 | 25 | 50* | 15* | 15* | 15* | 15* | 20* | 15* | 25* |
| Layer 34 | 7.5 | 6 | 5 | 7.5 | 5 | 5 | 5 | 5 | 5 | 5 | 5 |
| Layer 35 | 10** | 15 | 15 | 10** | 10** | 10** | 15 | 15 | 15 | 10 | 10 |
| Layer 36 | 7.5 | 6 | 5 | 7.5 | 5 | 5 | 5 | 5 | 5 | 5 | 5 |
| Layer 37 | 150 | 150 | 175 | 50* | 145* | 125* | 185 | 185 | 200 | 165* | 155 |
| Layer 38 | 25 | 25 | 25 | 25 | 35 | 35 | 15 | 25' | 15' | 25' | 25 |

| | | | | | | | | | | | |
|---|---|---|---|---|---|---|---|---|---|---|---|
| * = 15% ww talc filled material ** = Amorphous polyamide basic layer ' = 1% ww talc filled material | | | | | | | | | | | |

Other laminates 41 according to the invention are shown in Fig 4 which shows a five layer laminate.

The laminate 41 comprises an inner layer 42 of talc filled LMDPE or HDPE, a tie layer 43, a barrier layer 44 of amorphous polyamide, an outer tie layer 45 and an outer layer of talc filled HDPE or LMPDE 46. The thicknesses in microns of the various layers for samples 14-17 according to the present invention are shown in Table 2 below.

**Table 2**

| Sample | | | | |
|---|---|---|---|---|
| Layer | Sample 14 | Sample 15 | Sample 16 | Sample 17 |
| Layer 42 | 87* LMPDE | 110* LMPDE | 118* HDPE | 166* HDPE |
| Layer 43 | 5 | 5 | 5 | 5 |
| Layer 44 | 15 | 140 | 10 | 17 |
| Layer 45 | 5 | 5 | 5 | 5 |
| Layer 46 | 67* LMPDE | 59* LMPDE | 72* HDPE | 155* HDPE |

| | | | | |
|---|---|---|---|---|
| * 15% ww talc | | | | |

### Absorption Tests

The laminate material samples 1 to 17 were hermetically sealed across the mouths of 500 ml jars each containing a flavouring from the following: limonene, cineole, menthone and carvone. The mouths of the jars had a diameter of 48 mm to give an exposed area of laminate of 0.00181 m². The jars were maintained at a temperature of 25°C and at atmospheric pressure. The laminate samples were weighed periodically and the maximum absorption for all flavourings reached a substantially steady state after 7 days (168 hours).

The results of the tests for the prior art samples 1 and 2 are given in Table 3 below.

**Table 3**

| Absorption as weight (grams) gain per square meter after 7 days | | |
|---|---|---|
| Flavouring | Sample 1 | Sample 2 |
| limonene | 9.4444 | 3.9444 |
| cineole | 8.5552 | 4.3332 |
| menthone | 5.3332 | 2.7220 |
| carvone | 1.7222 | 1.0000 |

The results for samples 1 and 2 demonstrate that the placement of the barrier layer 24 closer to the inside surface of the laminate as in sample 2 is beneficial even though the thickness of the barrier layer 24 has been reduced in comparison to that of the barrier layer in sample 1, and the overall thickness of the laminate remains the same.

The results on the tests conducted on the samples of laminate constructed in accordance with Fig 3 are given below in Table 4.

If the results for sample 3 are compared with results for sample 6 it can be seen that sample 6 has unexpectedly good absorption properties in that the barrier layer 35 in sample 6 is spaced 82.5 microns from the internal surface of the laminate, which distance is identical to the spacing of the barrier layer 35 from the internal surface of the laminate of control sample 3. The improvement in absorption properties is due to the replacement of the HDPE layer 33, in sample 3, with the talc-filled HDPE layer of sample 7.

The talc-filled layer 33, which is inside the barrier layer 35, helps reduce the weight loss of flavouring due to absorption into the laminate. The talc-filled layer should be from between 5 to 150 microns in thickness, preferably from about 15 to 70 microns and more preferably about 50 microns in thickness. The talc-filled layer also tends to stiffen the laminate allowing a laminate of reduced overall thickness to be used whilst still maintaining a relatively stiff material.

Similarly, if the control sample 4 is compared with Sample 10 it can be seen that there is a marked decrease in flavour absorption due to the addition of talc to the inner HDPE layer 33 despite this layer being thinner in sample 10. A comparison between sample 5 and sample 13 shows a similar improvement on the absorption properties merely by adding talc to the inner HDPE layer 33.

A comparison between samples 10, 11 and 12 indicates that the absorption properties can be enhanced by including talc filler within the inner LMDPE layer 32.

A comparison between samples 9 and 12 would indicate that it is not critical whether the talc filler is included in the LMDPE inner layer 32 as in sample 12 or the HDPE inner layer 33 as in sample 9. The benefit in obtained by both constructions.

From samples 6, 13 and 9 it would be seen that the maximum benefits are obtained by keeping the talc filled HDPE inner layer down to a thickness of between 15-20 microns.

From samples 14-17 the absorption results are given in Table 5 below for a comparison between samples 15 and 16 the absorption properties are achieved by including the talc in HDPE rather than LMDPE, and that the inner layer containing the talc should be as thin as is possible for best reductions in absorption.

**Table 4**

| Absorption as weight (g) gain per square meter after 7 days | | | | | | | | | | | |
|---|---|---|---|---|---|---|---|---|---|---|---|
| Flavouring | Sample 3 | Sample 4 | Sample 5 | Sample 6 | Sample 7 | Sample 8 | Sample 9 | Sample 10 | Sample 11 | Sample 12 | Sample 13 |
| limonene | 11.2220 | 6.7600 | 4.2200 | 5.3880 | 3.9440 | 3.8320 | 3.1120 | 3.500 | 2.6680 | 3.2760 | 3.6640 |
| cineole | 9.9444 | 5.8800 | 3.7760 | 4.5560 | 3.5560 | 3.4440 | 3.0880 | 3.000 | 2.3880 | 2.7240 | 3.3888 |
| menthone | 7.2776 | 4.5600 | 2.5520 | 3.5560 | 2.2760 | 2.2240 | 1.7240 | 1.8320 | 1.5480 | 1.6680 | 2.0520 |
| carvone | 4.8332 | 2.440 | 1.6640 | 2.6120 | 1.4440 | 1.3320 | 1.2240 | 1.1120 | 1.1680 | 1.1680 | 1.9440 |

**Table 5**

| Absorption as weight (g) gain per square meter after 7 days | | | | |
|---|---|---|---|---|
| | **Samples of Second Embodiment** | | | |
| flavouring | Sample 14 | Sample 15 | Sample 16 | Sample 17 |
| limonene | 6.28 | 8.84 | 4.84 | 7.88 |
| cineole | 5.12 | 7.60 | 4.44 | 5.88 |
| menthone | 3.32 | 5.88 | 2.96 | 5.28 |
| carvone | 2.32 | 4.60 | 2.28 | 3.88 |

The laminate construction including the single layer 42 of talc filled HDPE on the inside of the barrier layer 44 has absorption properties that are improved over the contract sample 3 which has a similar thickness of non-polar polyethylene layer inside of an amorphous polyamide barrier layer.

## Claims

1. A method of reducing the absorbability of a laminated material used for the manufacture of flexible containers and which, in use, has an intended inner surface and an impermeable core barrier layer of ethylene vinyl alcohol, said method comprising arranging for at least one further layer, formed from a substantially non-polar thermoplastic resin filled with a platelet filler comprising talc, to be positioned inwardly of the barrier layer, wherein said talc has a CIE whiteness index of at least 40.

2. A method according to claim 1, wherein said further layer comprises from 5% to 30% by weight of said talc.

3. A method according to claim 1 or claim 2, wherein said further layer comprises a non-polar thermoplastic polyolefin resin.

4. A method according to any one of claims 1 to 3, wherein said further layer is adjacent said barrier layer and is adhered thereto by a tie layer.

5. A method according to any one of claims 1 to 4, wherein, in order to aid welding of the laminated material, said further layer is spaced from the inner surface of the laminated material by an additional layer of non-polar thermoplastic resin material.

6. A method according to claim 5, wherein said additional layer is also filled with a platelet filler.

7. A method according to any one of claims 1 to 6, wherein said barrier layer has a thickness of less than 25 microns.

8. A method according to claim 7, wherein said barrier layer has a thickness of from 5 to 25 microns.

9. A method according to claim 8, wherein said barrier layer has a thickness of from 5 to 15 microns.

10. A method according to any one of claims 1 to 9, wherein said further layer has a thickness of from 5 to 150 microns.

11. A method according to claim 10, wherein said further layer has a thickness of from 10 to 70 microns.

12. A method according to any one of claims 1 to 11, wherein the platelets of talc have an aspect ratio of at least 5 and an average aspect ratio of from 16 to 30.

13. A laminated material for the manufacture of a flexible container and which, in use, has a surface intended to be external of the container and a surface intended to be internal of the container, the laminated material comprising an intermediate barrier layer of ethylene vinyl alcohol having, on its inner side, at least one further layer comprising a substantially non-polar thermoplastic resin filled with a platelet filler comprising talc, wherein said talc has a CIE whiteness index of at least 40.

14. A laminated material according to claim 13, wherein said further layer comprises from 5% to 30% by weight of said talc.

15. A laminated material according to claim 13 or claim 14, wherein said further layer comprises a non-polar thermoplastic polyolefin resin.

16. A laminated material according to any one of claims 13 to 15, wherein said further layer has a thickness of between 20 and 150 microns, preferably about 50 microns.

17. A laminated material according to any one of claims 13 to 16, wherein said further layer comprises high density polyethylene, or at least a major portion of high density polyethylene.

18. A laminated material according to any one of claims 13 to 17, wherein said further layer is spaced from the internal surface of the laminated material by an additional layer of non-polar thermoplastic resin material.

19. A laminated material according to claim 18, wherein said additional layer is also filled with a platelet filler.

20. A laminated material according to any one of claims 13 to 19, wherein said barrier layer has a thickness of less than 25 microns.

21. A laminated material according to claim 20, wherein said barrier layer has a thickness of from 5 microns to 25 microns.

22. A laminated material according to claim 21, wherein said barrier layer has a thickness of from 5 microns to 15 microns.

23. A laminated material according to any one of claims 13 to 22, wherein said further layer has a thickness of from 10 to 70 microns.

24. A laminated material according to any one of claims 13 to 23, wherein the platelets of talc have an aspect ratio of at least 5 and an average aspect ratio of from 16 to 30.

25. A flexible container having walls formed from a laminated material as defined in any one of claims 13 to 24, said further layer being arranged internally of said barrier layer.

26. A flexible container having flexible walls formed from a laminated material having a core barrier layer of ethylene vinyl alcohol with at least one further layer arranged internally of the barrier layer, said at least one further layer comprising a substantially non-polar thermoplastic resin filled with platelets of talc having an aspect ratio of at least 5 and an average aspect ratio of from 16 to 30, and wherein said talc has a CIE whiteness index of at least 40.

27. A flexible container according to claim 26, wherein said further layer comprises from 5% to 30% by weight of said talc.

28. A flexible container according to claim 26 or claim 27, wherein said at least one further layer comprises a non-polar thermoplastic polyolefin resin.

29. A flexible container according to any one of claims 26 to 28, wherein said barrier layer has a thickness of less than 25 microns.

30. A flexible container according to claim 29, wherein said barrier layer has a thickness of from 5 microns to 25 microns.

31. A flexible container according to claim 30, wherein said barrier layer has a thickness of from 5 microns to 15 microns.

## Patentansprüche

1. Verfahren zur Reduktion der Absorptionsfähigkeit eines für die Herstellung flexibler Behälter verwendeten Verbundmaterials, welches bei Verwendung vorgesehene eine innere Oberfläche und eine undurchlässige Kernbarriereschicht aus Ethylen-Vinylalkohol aufweist, wobei das Verfahren das Anordnen mindestens einer weiteren Schicht, die aus einem im Wesentlichen unpolaren thermoplastischen Harz gebildet wird, das mit einem Talk-enthaltenden Täfelchenfüllstoff gefüllt ist, um im Inneren der Barriereschicht eingelagert zu sein, umfasst, worin der Talk einen CIE Weißgehalt von mindestens 40 aufweist.

2. Verfahren nach Anspruch 1, worin die weitere Schicht zwischen 5 Gewichts% und 30 Gewichts% Talk umfasst.

3. Verfahren nach Anspruch 1 oder nach Anspruch 2, worin die weitere Schicht ein unpolares thermoplastisches Polyolefinharz umfasst.

4. Verfahren nach einem der Ansprüche 1 bis 3, worin die weitere Schicht benachbart zu der Barriereschicht und durch einen Haftvermittler daran adhäriert ist.

5. Verfahren nach einem der Ansprüche 1 bis 4, worin die weitere Schicht von der inneren Oberfläche des Verbundmaterials durch eine zusätzliche Schicht eines unpolaren thermoplastischen Harzmaterials einen Abstand aufweist, um das Schweißen des Verbundmaterials zu unterstützen.

6. Verfahren nach Anspruch 5, worin die zusätzliche Schicht auch mit einem Täfelchenfüllstoff gefüllt ist.

7. Verfahren nach einem der Ansprüche 1 bis 6, worin die Barriereschicht eine Stärke von weniger als 25 Mikrometer aufweist.

8. Verfahren nach Anspruch 7, worin die Barriereschicht eine Stärke von 5 bis 25 Mikrometer aufweist.

9. Verfahren nach Anspruch 8, worin die Barriereschicht eine Stärke von 5 bis 15 Mikrometer aufweist.

10. Verfahren nach einem der Ansprüche 1 bis 9, worin die weitere Schicht eine Stärke von 5 bis 150 Mikrometer aufweist.

11. Verfahren nach Anspruch 10, worin die weitere Schicht eine Stärke von 10 bis 70 Mikrometern aufweist.

12. Verfahren nach einem der Ansprüche 1 bis 11, worin die Talktäfelchen ein Querschnittsverhältnis von mindestens 5 und ein durchschnittliches Querschnittsverhältnis von 16 bis 30 aufweise.

13. Verbundmaterial zur Herstellung eines flexiblen Behälters, welches bei Verwendung als eine außenliegende Oberfläche und als eine innere Oberfläche des Behälters vorgesehen ist, wobei das Verbundmaterial eine dazwischen liegende Barriereschicht aus Ethylen-Vinylalkohol umfasst, die auf ihrer inneren Seite mindestens eine weitere Schicht aufweist, die im Wesentlichen ein unpolares thermoplastisches Harz umfasst, das mit einem Talk-enthaltenden Täfelchenfüllstoff gefüllt ist, worin der Talk einen CIE Weißgehalt von mindestens 40 aufweist.

14. Verbundmaterial nach Anspruch 13, worin die weitere Schicht zwischen 5 Gewichts% und 30 Gewichts% Talk umfasst.

15. Verbundmaterial nach Anspruch 13 oder Anspruch 14, worin die weitere Schicht ein unpolares thermoplastisches Polyolefinharz umfasst.

16. Verbundmaterial nach einem der Ansprüche 13 bis 15, worin die weitere Schicht eine Stärke zwischen 20 und 150 Mikrometer, bevorzugt etwa 50 Mikrometer aufweist.

17. Verbundmaterial nach einem der Ansprüche 13 bis 16, worin die weitere Schicht ein Hochdichte-Polyethylen oder zumindest einen Hauptanteil an Hochdichte-Polyethylen umfasst.

18. Verbundmaterial nach einem der Ansprüche 13 bis 17, worin die weitere Schicht von der inneren Oberfläche des Verbundmaterials durch eine zusätzliche Schicht eines unpolaren thermoplastischen Harzmaterials einen Abstand aufweist.

19. Verbundmaterial nach Anspruch 18, worin die zusätzliche Schicht auch mit einem Täfelchenfüllstoff gefüllt ist.

20. Verbundmaterial nach einem der Ansprüche 13 bis 19, worin die Barriereschicht eine Stärke von weniger als 25 Mikrometer aufweist.

21. Verbundmaterial nach Anspruch 20, worin die Barriereschicht eine Stärke von 5 bis 25 Mikrometer aufweist.

22. Verbundmaterial nach Anspruch 21, worin die Barriereschicht eine Stärke von 5 bis 15 Mikrometer aufweist.

23. Verbundmaterial nach einem der Ansprüche 13 bis 22, worin die weitere Schicht eine Stärke von 10 bis 70 Mikrometern aufweist.

24. Verbundmaterial nach einem der Ansprüche 13 bis 23, worin die Talktäfelchen ein Querschnittsverhältnis von mindestens 5 und ein durchschnittliches Querschnittsverhältnis von 16 bis 30 aufweisen.

25. Flexibler Behälter, dessen Wandungen aus einem Verbundmaterial, wie in einem der Ansprüche 13 bis 24 definiert, gebildet sind, wobei die weitere Schicht im Inneren der Barriereschicht angeordnet ist.

26. Flexibler Behälter, dessen Wandungen aus einem Verbundmaterial gebildet sind, das eine Kernbarriereschicht aus Ethylenvinylalkohol mit mindestens einer weiteren Schicht, die im Inneren der Barriereschicht angeordnet ist, aufweist, wobei mindestens eine weitere Schicht ein im Wesentlichen unpolares thermoplastisches Harz umfasst, das mit Talktäfelchen, welche ein Querschnittsverhältnis von mindestens 5 und ein durchschnittliches Querschnittsverhältnis von 16 bis 30 aufweisen, gefüllt ist und worin der Talk einen CIE Weißgehalt von mindestens 40 aufweist.

27. Flexibler Behälter nach Anspruch 26, worin die weitere Schicht zwischen 5 Gewichts% und 30 Gewichts% Talk umfasst.

28. Flexibler Behälter nach Anspruch 26 oder Anspruch 27, worin die mindestens eine weitere Schicht ein unpolares thermoplastisches Polyolefinharz umfasst.

29. Flexibler Behälter nach einem der Ansprüche 26 bis 28, worin die Barriereschicht eine Stärke von weniger als 25 Mikrometer aufweist.

30. Flexibler Behälter nach Anspruch 29, worin die Barriereschicht eine Stärke von 5 bis 25 Mikrometer aufweist.

31. Flexibler Behälter nach Anspruch 30, worin die Barriereschicht eine Stärke von 5 bis 15 Mikrometer aufweist.

## Revendications

1. Procédé de réduction de la capacité d'absorption d'un matériau stratifié utilisé pour la fabrication de récipients souples et qui, en utilisation, possède une surface destinée à être à l'intérieur et une couche de barrière centrale imperméable d'éthylène-alcool-vinylique, ledit procédé comprenant l'agencement d'au moins une autre couche, formée à partir d'une résine thermoplastique substantiellement non polaire remplie d'un produit de charge en plaquettes comprenant du talc, pour être positionnée à l'intérieur de la couche de barrière, où ledit talc présente un indice de blancheur CIE d'au moins 40.

2. Procédé selon la revendication 1, dans lequel ladite autre couche comprend de 5 à 30 % en poids dudit talc.

3. Procédé selon la revendication 1 ou la revendication 2, dans lequel ladite autre couche comprend une résine polyoléfine thermoplastique non polaire.

4. Procédé selon l'une quelconque des revendications 1 à 3, dans lequel ladite autre couche est adjacente à ladite couche de barrière et est collée à celle-ci par une couche liante.

5. Procédé selon l'une quelconque des revendications 1 à 4, dans lequel, de manière à contribuer au soudage du matériau stratifié, ladite autre couche est écartée de la surface intérieure du matériau stratifié par une couche supplémentaire d'une matière de résine thermoplastique non polaire.

6. Procédé selon la revendication 5, dans lequel ladite couche supplémentaire est également remplie d'un produit de charge en plaquettes.

7. Procédé selon l'une quelconque des revendications 1 à 6, dans lequel ladite couche de barrière présente une épaisseur inférieure à 25 micromètres.

8. Procédé selon la revendication 7, dans lequel ladite couche de barrière présente une épaisseur de 5 à 25 micromètres.

9. Procédé selon la revendication 8, dans lequel ladite couche de barrière présente une épaisseur de 5 à 15 micromètres.

10. Procédé selon l'une quelconque des revendications 1 à 9, dans lequel ladite autre couche présente une épaisseur de 5 à 150 micromètres.

11. Procédé selon la revendication 10, dans lequel ladite autre couche présente une épaisseur de 10 à 70 micromètres.

12. Procédé selon l'une quelconque des revendications 1 à 11, dans lequel les plaquettes de talc présentent un rapport de dimensions d'au moins 5 et un rapport de dimensions moyen de 16 à 30.

13. Matériau stratifié pour la fabrication d'un récipient souple et qui, en utilisation, présente une surface destinée à être à l'extérieur du récipient et une surface destinée à être à l'intérieur du récipient, le matériau stratifié comprenant une couche de barrière intermédiaire d'éthylène-alcool-vinylique ayant, sur son côté intérieur, au moins une autre couche comprenant une résine thermoplastique pratiquement non polaire remplie d'un produit de charge en plaquettes comprenant du talc, où ledit talc présente un indice de blancheur CIE d'au moins 40.

14. Matériau stratifié selon la revendication 13, dans lequel ladite autre couche comprend de 5 % à 30 % en poids dudit talc.

15. Matériau stratifié selon la revendication 13 ou la revendication 14, dans lequel ladite autre couche comprend une résine polyoléfine thermoplastique non polaire.

16. Matériau stratifié selon l'une quelconque des revendications 13 à 15, dans lequel ladite autre couche présente une épaisseur entre 20 et 150 micromètres, de préférence environ 50 micromètres.

17. Matériau stratifié selon l'une quelconque des revendications 13 à 16, dans lequel ladite autre couche comprend du polyéthylène haute densité, ou au moins une partie principale de polyéthylène haute densité.

18. Matériau stratifié selon l'une quelconque des revendications 13 à 17, dans lequel ladite autre couche est écartée de la surface interne du matériau stratifié par une couche supplémentaire de matière de résine thermoplastique non polaire.

19. Matériau stratifié selon la revendication 18, dans lequel ladite couche supplémentaire est également remplie d'un produit de charge en plaquettes.

20. Matériau stratifié selon l'une quelconque des revendications 13 à 19, dans lequel ladite couche de barrière présente une épaisseur inférieure à 25 micromètres.

21. Matériau stratifié selon la revendication 20, dans lequel ladite couche de barrière présente une épaisseur de 5 à 25 micromètres.

22. Matériau stratifié selon la revendication 21, dans lequel ladite couche de barrière présente une épaisseur de 5 à 15 micromètres:

23. Matériau stratifié selon l'une quelconque des revendications 13 à 22, dans lequel ladite autre couche présente une épaisseur de 10 à 70 micromètres.

24. Matériau stratifié selon l'une quelconque des revendications 13 à 23, dans lequel les plaquettes de talc présentent un rapport de dimensions d'au moins 5 et un rapport de dimensions moyen de 16 à 30.

25. Récipient souple comportant des parois formées à partir d'un matériau stratifié selon l'une quelconque des revendications 13 à 24, ladite autre couche étant agencée à l'intérieur de ladite couche de barrière.

26. Récipient souple comportant des parois souples formées à partir d'un matériau stratifié comportant une couche de barrière centrale d'éthylène-alcool-vinylique ainsi qu'au moins une autre couche agencée à l'intérieur de la couche de barrière, ladite au moins une autre couche comprenant une résine thermoplastique pratiquement non polaire remplie de plaquettes de talc ayant un rapport de dimensions d'au moins 5 et un rapport de dimensions moyen de 16 à 30, et dans lequel ledit talc présente un indice de blancheur CIE d'au moins 40.

27. Récipient souple selon la revendication 26, dans lequel ladite autre couche comprend de 5 à 30 % en poids dudit talc.

28. Récipient souple selon la revendication 26 ou la revendication 27, dans lequel ladite au moins une autre couche comprend une résine polyoléfine thermoplastique non polaire.

29. Récipient souple selon l'une quelconque des revendications 26 à 28, dans lequel ladite couche de barrière présente une épaisseur inférieure à 25 micromètres.

30. Récipient souple selon la revendication 29, dans lequel ladite couche de barrière présente une épaisseur de 5 micromètres à 25 micromètres.

31. Récipient souple selon la revendication 30, dans lequel ladite couche de barrière présente une épaisseur de 5 micromètres à 15 micromètres.
